# EUROPEAN PATENT SPECIFICATION

(11) **EP 2 489 583 B1**
(45) Date of publication and mention of the grant of the patent: **21.08.2013**
(21) Application number: 11154694.1
(22) Date of filing: 16.02.2011
(51) Int. Cl.: B62K 15/00

(54) **Folding bicycle frame and folding bicycle**
Klappradrahmen und Klapprad
Cadre de bicyclette pliante et bicyclette pliante

(43) Date of publication of application: 22.08.2012
(73) Proprietor: Darfon Electronics Corp., Taoyuan 33341 (TW)
(72) Inventor: Hsu, Chien-Shih, 33341, Taoyuan (TW)
(74) Representative: Becker Kurig Straus

(56) References cited:
- EP-A1- 2 221 205
- WO-A1-03/016124
- WO-A1-2010/054500
- CN-A- 101 020 484
- DE-A1-102005 022 130
- US-A- 4 182 522
- US-A1- 2007 205 577
- US-B1- 6 641 159

## Description

### Field of the Invention

The present invention relates to a folding bicycle frame according to the pre-characterizing clauses of claim 1.

### Background of the Invention

For convenience of transport, a conventional folding bicycle is to be folded for reducing its volume. The folding bicycle generally has only one pivot connection. Through the volume is reduced after the folding bicycle is folded, the folded folding bicycle is not small enough because the handlebar and the saddle of the folding bicycle are still quite protrusive. The size of an accommodating space for the folded folding bicycle needs to be much larger than that for the rear wheel obviously. Therefore, it is inconvenient to transport the folded folding bicycle.

In addition, the volume of the folded folding bicycle can be reduced more by taking off the handlebar and removing the seat post from the main structure of the folding bicycle; however, it is still inconvenient to transport or pack the folded folding bicycle with the separate components.

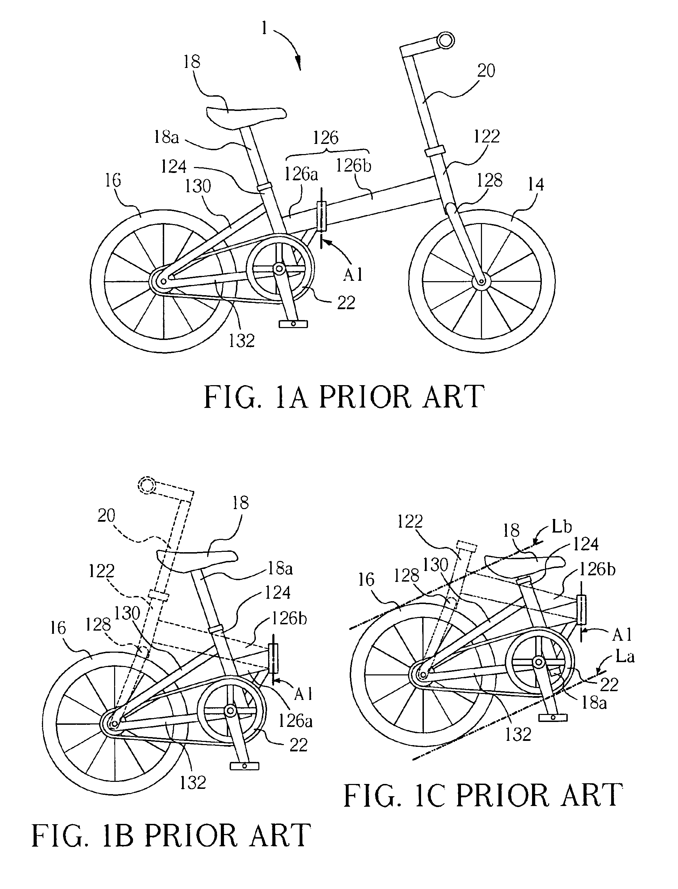

Please refer to FIG. 1A, which is a schematic diagram of a folding bicycle 1 in the prior art. The folding bicycle 1 mainly includes a bicycle frame, a front wheel 14, a rear wheel 16, a saddle 18, and a handlebar 20. The bicycle frame includes a head tube 122, a seat tube 124, a top tube 126 connected to the head tube 122 and the seat tube 124, a front fork 128 connected to the front wheel 14, and seat stay 130 and chain stay 132 which are connected to the rear wheel 16. The folding bicycle 1 has a pivot connection structure disposed in the top tube 126, such that the top tube 126 is divided into two portions 126a and 126b pivotally connected to each other about a pivot axis A1 (whose location is indicated by a center line). As shown in FIG. 1A, the pivot axis A1 is perpendicular to and bisects a line connecting the centers of the front wheel 14 and the rear wheel 16. Hence, the front wheel 14 and the rear wheel 16 of the folding bicycle 1 substantially entirely overlap after the folding bicycle 1 is folded, so that the length of the folding bicycle 1 is greatly reduced, as shown in FIG. 1B. It is added that after the folding bicycle 1 is folded, the handlebar 20, the head tube 122 and so on are shown in dashed lines; besides, because the front wheel 14 and the rear wheel 16 substantially entirely overlap, the front wheel 14 is not shown in FIG. 1B for simplifying drawing reading.

However, the folded folding bicycle 1 in FIG. 1B still has a certain height. For further reducing the height, the saddle 18 can be detached away from the seat tube 124 or be depressed so that the seat post 18a can be inserted in the seat tube 124 more to shorten the height at the saddle 18; furthermore, the handlebar 20 is uneasily folded to be close to the bicycle frame due to being substantially T-shaped, so the handlebar 20 can be taken away to reduce the height at the handlebar 20.

Please refer to FIG. 1C, which is a schematic diagram of the folding bicycle 1 in FIG. 1A after having been folded; therein, the handlebar 20 is detached, the saddle 18 is depressed, and a portion of the seat post 18a protrudes out from the seat tube 124 (at the vacant space of a chain wheel 22 shown in FIG. 1C) due to the depression of the saddle 18. Reference lines La and Lb (shown by chain lines) in FIG. 1C are parallel to each other. The reference line La is substantially tangential to the rear wheel 16 and the chain wheel 22; the reference line Lb is substantially tangential to the rear wheel 16 only. Usually, the wheels except for the bicycle frame are the components with the largest size. Obviously, the length of the bicycle frame is reduced by half after the folding bicycle 1 is folded, but the head tube 122 and the saddle 18 still partially protrude out from the reference line Lb, which means that the occupied space for the folded folding bicycle 1 necessarily has a dimension larger than the diameter of the wheel. This shows not only the folded folding bicycle 1 still needs a certain space for packing and transporting but also a trunk of a common automobile cannot simultaneously accommodate a few of the folding bicycles 1 due to the height of the trunk.

Besides, there has been a patent disclosing folding bicycles in the prior art described as followed.

Patent US 4182522 discloses a folding bicycle frame according to the preamble of claim 1 in which the rear wheel is mounted in a rear frame hinged to the main frame of the bicycle so that the rear frame can be folded beneath the bicycle. The main frame is also provided with a hinge and the handlebars fold downwardly. Special quick release clamps are also provided for the various folding parts.

### Summary of the Invention

This in mind, the present invention aims at providing a folding bicycle frame that uses a linkage mechanism to further fold the structure of the folding bicycle with the capacity of adjusting a relative position between a rear frame and a rear-wheel support assembly so as to efficiently reduce the volume of the folded folding bicycle frame.

This is achieved by a folding bicycle frame according to claim 1. The dependent claims pertain to corresponding further developments and improvements.

As will be seen more clearly from the detailed description following below, the claimed folding bicycle frame includes a front frame, a rear frame, a rear-wheel support assembly, a seat support, and a link. The rear frame thereon defines a plane and a first pivot axis parallel to the plane. The rear frame is pivotally connected to the front frame about the first pivot axis. The rear-wheel support assembly thereon defines a second pivot axis perpendicular to the plane. The rear-wheel support assembly is pivotally connected to the rear frame about the second pivot axis. The seat support thereon defines a third pivot axis parallel to the second pivot axis. The seat support is pivotally connected to the rear-wheel support assembly about the third pivot axis. The link thereon defines a fourth pivot axis and a fifth pivot axis respectively parallel to the second pivot axis. The link is pivotally connected to the seat support about the fourth pivot axis and to the rear frame about the fifth pivot axis. The rear frame, the rear-wheel support assembly, the seat support, and the link form a four-bar linkage mechanism. The front frame is capable of folding toward the rear frame around the first pivot axis, and the rear-wheel support assembly is capable of rotating relatively to the rear frame around the second pivot axis so as to adjust a relative position between the rear-wheel support assembly and the front frame. The seat support is capable of rotating along a direction toward the first pivot axis around the third pivot axis.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof:
FIG. 1A is a schematic diagram of a folding bicycle in the prior art,
FIG. 1B is a schematic diagram demonstrating a folded state of the folding bicycle in FIG. 1A in the prior art,
FIG. 1C is a schematic diagram of the folding bicycle in FIG. 1A after having been folded in the prior art,
FIG. 2 is a schematic diagram of a folding bicycle of a first preferred embodiment according to the invention,
FIG. 3 is a top view of the folding bicycle in FIG. 2,
FIG. 4 is a mechanism diagram of a four-bar linkage mechanism of the folding bicycle in FIG. 2,
FIG. 5A is a schematic diagram demonstrating a relative position between a rear frame and a rear-wheel support assembly of the folding bicycle in FIG. 2 when the front frame has been folded backward,
FIG. 5B is a schematic diagram demonstrating another relative position between the rear frame and the rear-wheel support assembly of the folding bicycle in FIG. 2,
FIG. 6 is an action diagram demonstrating the linkage mechanism of the folding bicycle in FIG. 2,
FIG. 7 is a schematic diagram of the folding bicycle in FIG. 2, whose handlebar is folded,
FIGS. 8A and 8B are schematic diagrams in different views of the folding bicycle in FIG. 2 after being folded,
FIG. 9A is a schematic diagram of a locking device of the folding bicycle in FIG. 2,
FIG. 9B is an exploded view of the folding bicycle in FIG. 2,
FIGS. 10A through 10D are schematic diagrams demonstrating the folding action of the folding bicycle having the locking device,
FIG. 11A is a schematic diagram of another way to use the locking device,
FIG. 11B is a schematic diagram demonstrating the locking device in FIG. 11A is unlocked due to the action of the four-bar linkage mechanism,
FIG. 12A is a schematic diagram of a folding bicycle of a second preferred embodiment according to the invention, and
FIG. 12B is a schematic diagram of the folding bicycle in FIG. 12A with being partially folded.

### Detailed Description

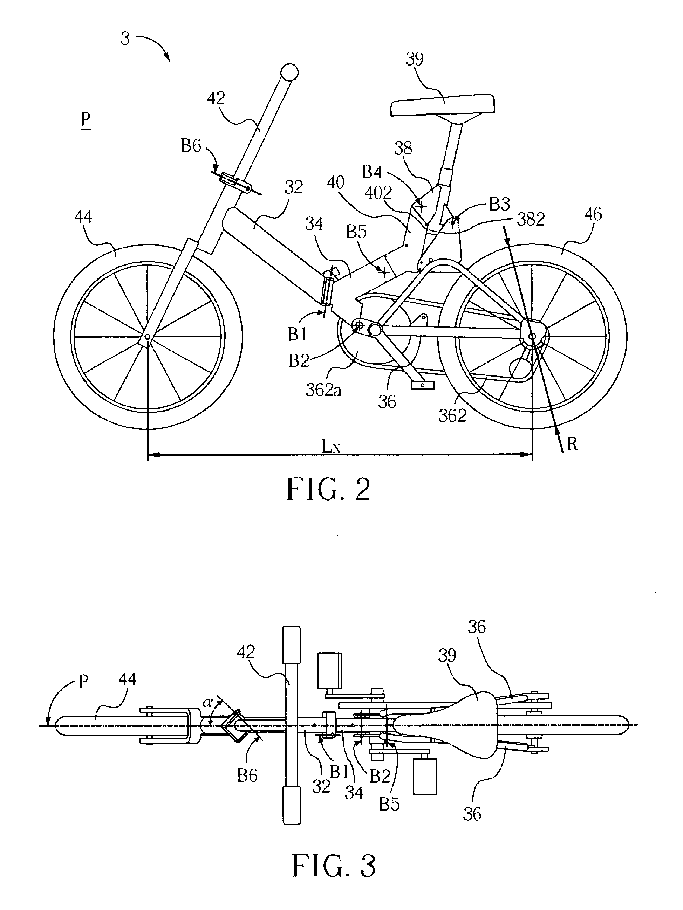

For solving the above-mentioned problem in the prior art, the present invention provides a folding bicycle frame and a related folding bicycle. Please refer to FIG. 2 and FIG. 3. FIG. 2 is a schematic diagram of a folding bicycle 3 of a first preferred embodiment according to the invention. FIG. 3 is a top view of the folding bicycle 3. The folding bicycle 3 mainly includes a front frame 32, a rear frame 34, a rear-wheel support assembly 36, a seat support 38, a saddle 39, a link 40, a handlebar 42, a front wheel 44, and a rear wheel 46.

For convenience of explanation, a plane P and a plurality of pivot axes B1~B6 are defined for reference. The plane P corresponds to the sheet of FIG. 2 and perpendicular to the sheet of FIG. 3. In FIG. 3, the plane P is indicated by a chain line. The first pivot axis B1 is parallel to the plane P and is indicated by a center line in FIG. 2. The second to fifth pivot axes B2~B5 are parallel to each other and perpendicular to the plane P, indicated by cross center lines. The sixth pivot axis B6 has an included angle α relative to the plane P, substantially equal to the inclination of 45 degrees, and is indicated by a center line. The front wheel 44 is pivotally connected to the front frame 32. The rear frame 34 and the front frame 32 are pivotally connected about the first pivot axis B1. The rear-wheel support assembly 36 and the rear frame 34 are pivotally connected about the second pivot axis B2 . The rear wheel 46 is pivotally connected to the rear-wheel support assembly 36. The seat support 38 and the rear-wheel support assembly 36 are pivotally connected about the third pivot axis B3. The link 40 is pivotally connected to the seat support 38 about the fourth pivot axis B4 and to the rear frame 34 about the fifth pivot axis B5. The rear frame 34, the rear-wheel support assembly 36, the seat support 38, and the link 40 form a four-bar linkage mechanism, the action plane of which is the plane P. The rear-wheel support assembly 36 further includes a chain transmission mechanism 362 to be a medium for a user to apply force for driving the rear wheel 46.

The folding bicycle 3 in FIG. 2 is in a ride state. The four-bar linkage mechanism has one degree of freedom (under an assumption of the rear-wheel support assembly 36 being a fixed link), so the folding bicycle 3 according to the invention includes a first stop portion 402 disposed on the link 40 and a second stop portion 382 disposed on the seat support 38 for constraining the degree of freedom of the four-bar linkage mechanism. When the folding bicycle 3 is in the ride state, the first stop portion 402 and the second stop portion 382 abut against each other, so that the four-bar linkage mechanism is stably fixed. In addition, please refer to FIG. 2. A wheelbase Lx is defined between the centers of the front frame 32 and the rear frame 34, a ratio of the wheelbase Lx to the wheel diameter R of the rear wheel 46 is preferred to be 2:1; however, the invention is not limited to this.

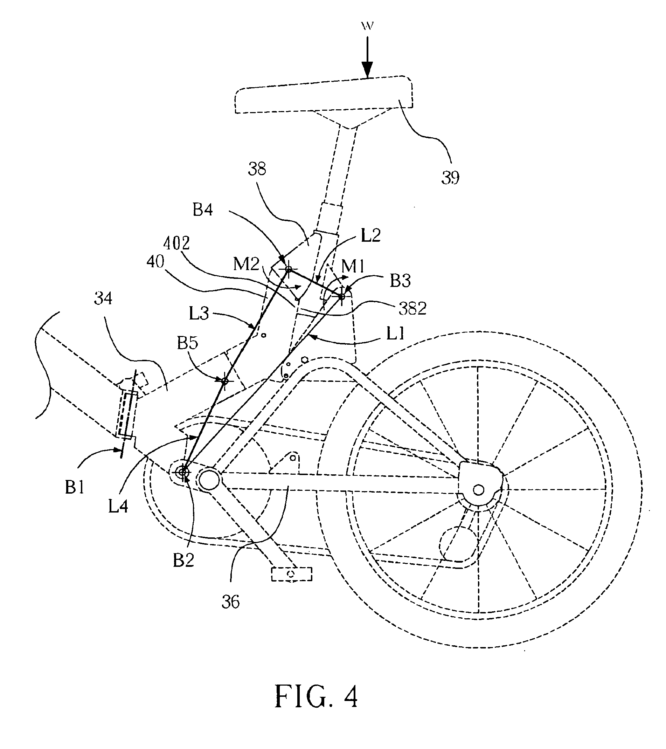

Please refer to FIG. 2 and FIG. 4. FIG. 4 is a mechanism diagram of a four-bar linkage mechanism of the folding bicycle 3 in FIG. 2; therein, the folding bicycle 3 is partially drawn by dashed lines for showing the association of the mechanism diagram with physical parts. For convenience of drawing reading, in FIG. 4, only the parts corresponding to the linkage mechanism and the positions (shown by cross center lines) of the needed pivot axes are labeled; the links L1~L4 are shown by thick lines; the pivotal junctions are shown by thick circles. In FIG. 4, the first link L1 represents the rear-wheel support assembly 36, and the length from the second pivot axis B2 to the third pivot axis B3 is defined to be a first link Length; the second link L2 represents the seat support 38, and the length from the third pivot axis B3 to the fourth pivot axis B4 is defined to be a second link Length; the third link L3 represents the link 40, and the length from the fourth pivot axis B4 to the fifth pivot axis B5 is defined to be a third link Length; the fourth link L4 represents the rear frame 34, and the length from the fifth pivot axis B5 to the second pivot axis B2 is defined to be a fourth link Length.

The first stop portion 402 and the second stop portion 382 can just constrain the linkage mechanism in one direction. For a total constraint on the linkage mechanism, a pin can be used and inserted into corresponding holes formed on two of the links of the linkage mechanism, not limited to being adjacent two of the links; for example, the link 40 and the rear-wheel support assembly 36. However, the invention is not limited to this. In the first embodiment, the stop mechanism consisting of the first stop portion 402 and the second stop portion 382 has the action constraint in only one direction, although the folding bicycle 3 in the ride state uses a weight force w (shown by a thick arrow) applied on the seat support 38 by a user to constrain the action of the four-bar linkage mechanism so as to keep the first stop portion 402 and the second stop portion 382 abutted against each other.

In more detail, as shown in FIG. 4, the extension line of the weight force w passes through the right side of the third pivot axis B3, so the weight force w induces a clockwise rotational moment M1 (shown by a thick arrow) around the third pivot axis B3 on the second link L2 (i.e. the seat support 38). According to the action features of the four-bar linkage mechanism, the weight force w also induces an anticlockwise rotational moment M2 (shown by a thick arrow) around the fourth pivot axis B4 indirectly on the third link L3 (i.e. the link 40), so as to keep the first stop portion 402 and the second stop portion 382 abutted against each other further. Therefore, the four-bar linkage mechanism is stably fixed. The design, under consideration to the stability of the four-bar linkage mechanism, decreases the usage of components, which is conducive to the stability of production and avoids causing damage to the structure strength.

Please refer to FIG. 2 and FIG. 4. Because the rear frame 34 and the rear-wheel support assembly 36 are pivotally connected about the second pivot axis B2, after the front frame 32 is folded toward the rear frame 34 around the first pivot axis B1, the rear-wheel support assembly 36 is still capable of rotating relatively to the rear frame 34 around the second pivot axis B2 (that is the rear frame 34 rotates relatively to the rear-wheel support assembly 36) so as to adjust the relative position between the rear-wheel support assembly 36 and the front frame 32, that is to adjust the relative position between the rear wheel 46 and the front wheel 44. Further, an angle range for the rotation by the rear frame 34 relatively to the rear-wheel support assembly 36 is about from 10 degrees to 90 degrees. In addition, the second pivot axis B2 is between the center of the chain wheel 362a and the first pivot axis B1, so that the structural integrity of the chain transmission mechanism 362 and the rear-wheel support assembly 36 can be maintained.

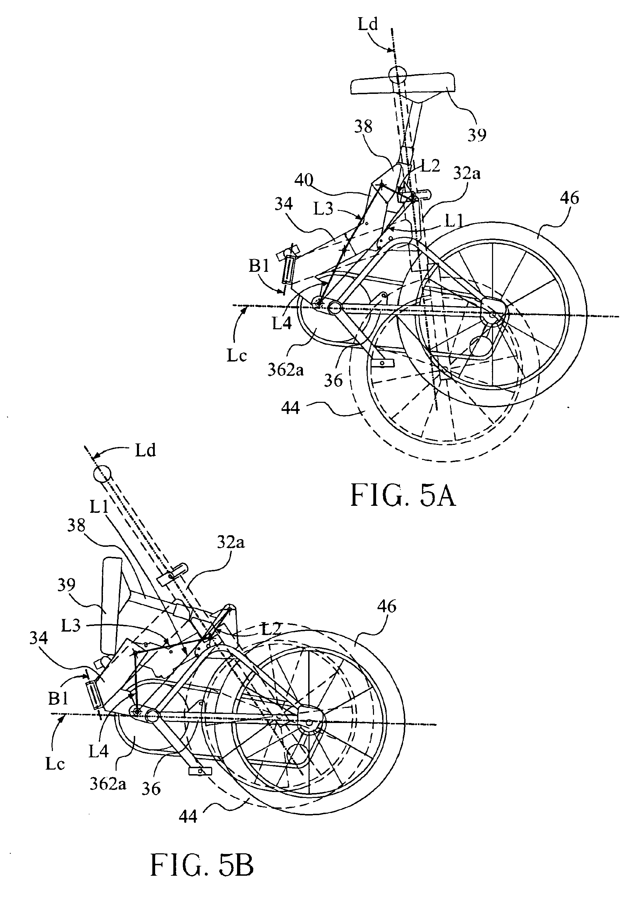

Please also refer to FIG. 5A and FIG. 5B. FIG. 5A is a schematic diagram demonstrating a relative position between the rear frame 34 and the rear-wheel support assembly 36 when the front frame 32 has been folded backward. FIG. 5B is a schematic diagram demonstrating another relative position between the rear frame 34 and the rear-wheel support assembly 36. Therein, the front frame 32, the front wheel 44, and the handlebar 42 are shown in dashed lines; the handlebar 42 is not folded downward in order to conspicuously show the relative position between the front wheel 44 and the rear wheel 46. FIG. 5A and FIG. 5B respectively show a different adjusted position due to the rotation by the rear frame 34 relative to the rear-wheel support assembly 36.

For convenience of explanation, two reference lines Lc and Ld are defined in FIG. 5A and FIG. 5B. The reference line Lc passes through the centers of the rear wheel 46 and the chain wheel 362a of the chain transmission mechanism 362. The reference line Ld is parallel to the axle center of a head tube 32a of the front frame 32. Obviously, as shown in FIG. 5A, when the rear frame 34 and the rear-wheel support assembly 36 do not rotate relatively, the included angle between the reference lines Lc and Ld is relatively large. On the contrary, as shown in FIG. 5B, when the rear frame 34 and the rear-wheel support assembly 36 have rotated relatively, the included angle between the reference lines Lc and Ld is smaller than that in FIG. 5A, so the head tube 32a of the front frame 32 has been retracted, which solves the problem in the prior art.

It is added that in FIG. 5A, the position difference between the front wheel 44 and the rear wheel 46 is significant because the whole structure of the folding bicycle 3 is based on the technical features of the invention, so the folded structure of the folding bicycle 3 in FIG. 5A is different from a common folding bicycle. In other words, the protrusion phenomenon of the head tube 32a of the front frame 32 can be clearly shown by just rotating the front frame 32 (and the front wheel 44, the handlebar 42, and so on) parallel to the sheet of FIG. 5A around the location of the first pivot axis B1 in FIG. 5A such that the front wheel 44 and the rear wheel 46 are aligned substantially.

In the first embodiment, the relative rotation of the rear frame 34 and the rear-wheel support assembly 36 can be achieved by the four-bar linkage mechanism. Furthermore, according to the action features of linkage, during the relative rotation of the rear frame 34 (i.e. the fourth link L4) and the rear-wheel support assembly 36 (i.e. the first link L1), the seat support 38 (i.e. the second link L2) also rotates toward the rear frame 34 (i.e. toward the first pivot axis B1) to be retracted, the rotational angle of which is about 60 degrees to 100 degrees, so that the seat support 38 is not so protrusive as the saddle 18 in the prior art (as shown in FIG. 1C). It is added that the rotation of the rear frame 34 relative to the rear-wheel support assembly 36 and the rotation of the seat support 38 relative to the rear-wheel support assembly 36 can be operated independently by only pivotal connections or by different linkage mechanisms; however, the invention is not limited to this. It is sure that integrating the rotational actions of the both is conducive to the convenience of packing (i.e. folding), so that a user can achieve two purposes of rotation for packing in one operation.

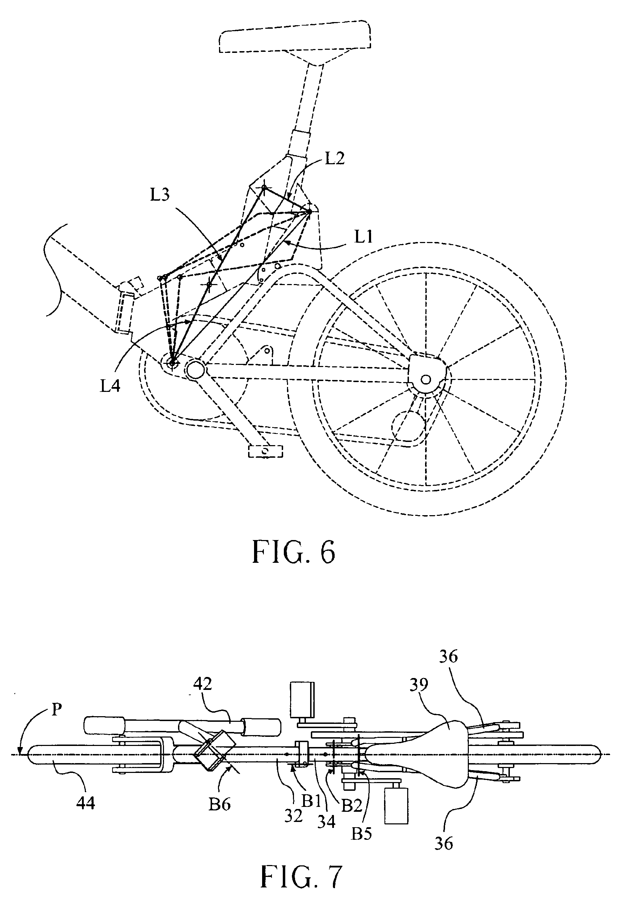

In addition, in view of the integrated design of the linkage mechanism in the first embodiment, if the lengths of the links are properly designed, the linkage mechanism can have a non-linear rotational relation between the links thereof, which increases the allowable tolerance in the manufacturing of the links and also increases the convenience and the tolerance capacity for the operation (e.g. folding, packing) in use. Please refer to FIG. 6, which is an action diagram demonstrating the linkage mechanism of the folding bicycle 3. For convenience of explanation, the links L1~L4 are shown by thick lines, the pivotal connections are shown by thick circles, and the folding bicycle 3 is partially drawn by dashed lines. The actions of the links L1~L4 are shown by thick dashed lines. The sum of the first link Length and the fourth link Length is larger than the sum of the second link Length and the third link Length.

Please refer to FIG. 3 and FIG. 7. FIG. 7 is a schematic diagram of the folding bicycle in FIG. 2 whose handlebar 42 is folded. Because the sixth pivot axis B6 has an inclination of 45 degrees to the plane P, the T-shaped handlebar 42 can be quite close to the front frame 32 after being folded downward. Therefore, it is unnecessary to detach the handlebar 42 from the folding bicycle 3 in advance as in the prior art, which avoids the management inconvenience and the losing risk due to the separated components.

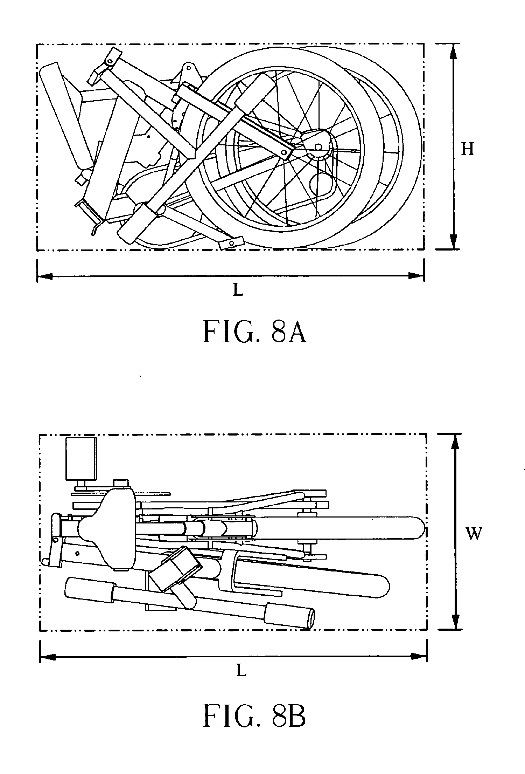

The folding mechanism for every component has been explained in the above. The invention is not limited to the detachment in advance of the front frame 32 or the handlebar 42 from the folding bicycle 3, so a user still can fold the folding bicycle 3 by his habits. The schematic diagrams of he folding bicycle 3 folded for packing are shown in FIG. 8A and FIG. 8B, no matter in what order the front frame 32, the handlebar 42, and the seat support 38 are folded. FIG. 8A and FIG. 8B are the schematic diagrams in different views of the folding bicycle 3 in FIG. 2 after being folded; therein, the length L and the height H of the accommodating space for accommodating the folded folding bicycle 3 are shown by chain lines in FIG. 8A, and the length L and the width W of the accommodating space are shown by chain lines in FIG. 8B. It is added that the accommodating space in FIG. 8B can be decreased further by folding the pedal.

Obviously, the height H among the three dimensions of the accommodating space is substantially equal to the diameter of the rear wheel 46 (or the front wheel 44). According to the above description about the folding operation and mechanism on the folding bicycle 3, the head tube 32a of the front frame 32, the pivotal connection portion of the handlebar 42 with the head tube 32a about the sixth pivot axis B6, and the seat support 38 (also including the saddle 39) can be further retracted into the accommodating space (also referring to FIG. 2 and FIG. 5A or 5B) under a proper design on the linkage mechanism, so that one among the dimensions of the accommodating space is the diameter of the wheel. For example, a proper design can make the seat support 38 and the saddle 39 be further retracted without significant influence on the relative position between the front wheel 44 and the rear wheel 46 (or between the front frame 32 and the rear-wheel support assembly 36). Besides, the adjustment in the relative position between the front wheel 44 and the rear wheel 46 can be influenced by the distance between the first pivot axis B1 and the second pivot axis B2. Moreover, the front wheel 44 and the rear wheel 46 can be staggered in the folding by the technique so as to decrease the width W of the accommodating space further.

Furthermore, the folding bicycle according to the invention uses the linkage mechanism to fold the seat support, so when the folding bicycle is expanded again after being folded, the seat support is back to the original position without any further adjustment in height. Similarly, because the pivot axis where the handlebar and the front frame are pivotally connected has an inclination of 45 degrees relative to the plane (i.e. the plane P) where the front wheel is disposed, so the handlebar can be folded downward to be close the front wheel and also can be expanded upward back to the original position without any further adjustment in height. The design eliminates the problem in the prior art that the folding bicycle which is folded with the detached saddle and handlebar needs adjustments in height after the folding bicycle is expanded again; the design also avoids the risk of losing the separated components.

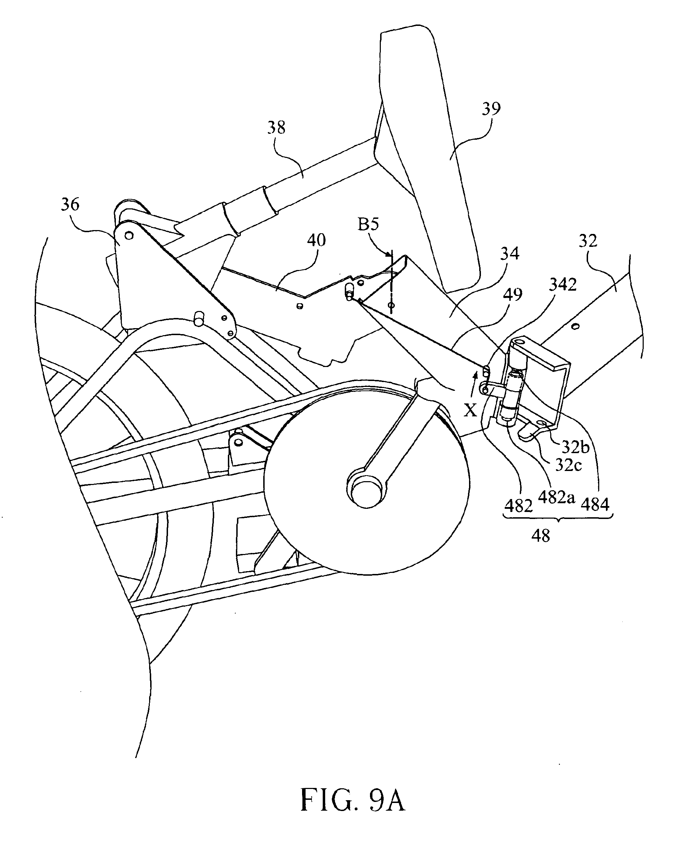

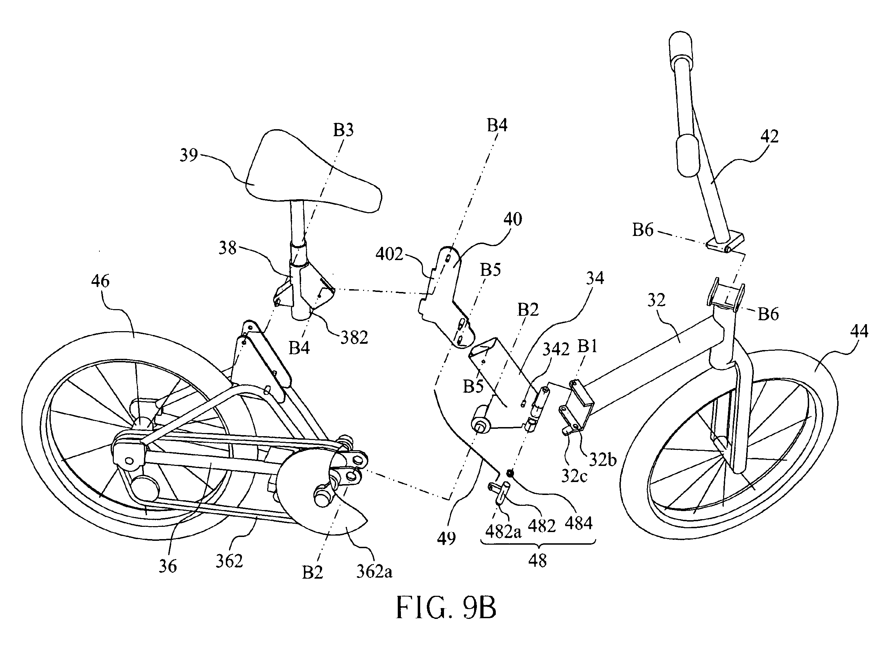

Please refer to FIG. 9A and FIG. 9B. FIG. 9A is a schematic diagram of a locking device 48 of the folding bicycle 3 in FIG. 2. FIG. 9B is an exploded view of the folding bicycle 3 in FIG. 2. For convenience of explanation, FIG. 9A is shown in a case that the rear frame 34 and the front frame 32 are detached for example. The locking device 48 includes a T-shaped latch 482 and a spring 484 (shown by a thick line). The folding bicycle 3 also has a connection cable 49 to be the transmission part for actuating the locking device 48. The latch 482 is disposed to slide in a slide channel of the rear frame 34. The slide channel has an open for a protrusive portion 482a of the latch 482 to protrude through. The portion of the latch 482 inside the slide channel is shown by dashed lines. The spring 484 is disposed at a closed end of the slide channel for abutting against the rear frame 34 and the latch 482 so that the latch 482 can lock and fix the front frame 32 by protruding the protrusive portion 482a through the opening into a locating hole 32b of the front frame 32. The connection cable 49 connects the latch 482 and the link 40. When the latch 482 has locked the front frame 32 (i.e. the protrusive portion 482a has been inserted into the locating hole 32b), the four-bar linkage mechanism can be operated to drive the link 40 to drive (or draw) the connection cable 49 so that the latch 482 slides along a direction X and the protrusive portion 482a is disengaged from the front frame 32. When the front frame 32 and the rear frame 34 are to be engaged again, the front frame 32 can be rotated relatively to the rear frame 34 such that the protrusive portion 482a of the latch 482 is inserted into the locating hole 32b again. Although the protrusive portion 482a protrudes out the open of the slide channel, the protrusive portion 482a of the latch 482 can be depressed by a tongue portion 32c with a lead angle of the front frame 32 back to the slide channel to be inserted into the locating hole 32b again.

It is added that the locking device 48 in FIG. 9A and FIG. 9B is driven by the connection cable 40 drawn by the four-bar linkage mechanism; therein, the disengagement of the protrusive portion 482a from the locating hole 32b needs a certain displacement. For the normal action of the protrusive portion 482a, a guiding rod 342 is disposed on the rear frame 34 such that the connection cable 40 can be guided to draw the latch 482 and the latch 482 can have an enough displacement produced during the action of the link 40.

As described above, the folding bicycle 3 in FIG. 9A and FIG. 9B can perform the functions of folding the seat support 38, adjusting the relative position between the rear frame 34 and the rear-wheel support assembly 36, and locking the front frame 32 and the rear frame 34 by driving a single link. By the design, a user can fold or expand the folding bicycle 3 more conveniently and more quickly.

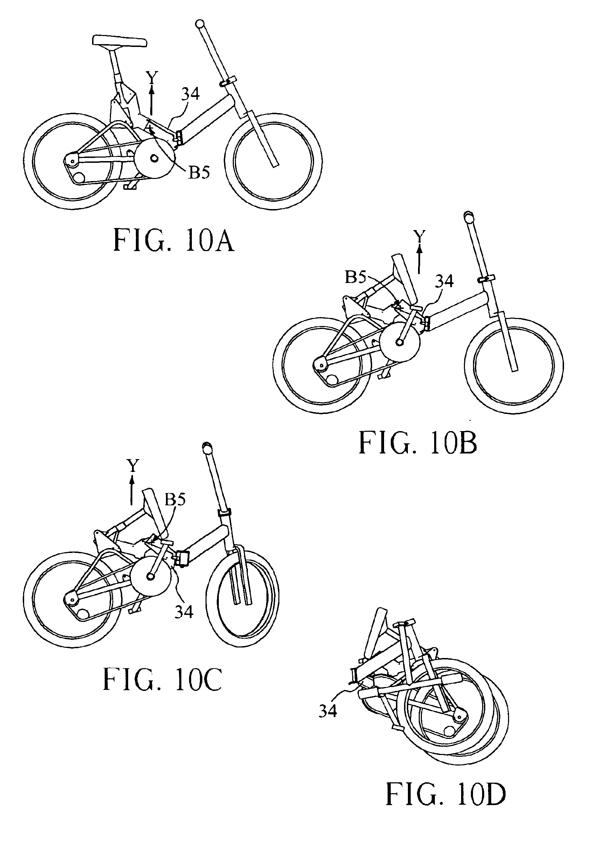

Therefore, the folding action for the folding bicycle 3 having the locking device 48 is shown as FIGS. 10A to 10D; therein, for convenience of drawing reading, all component labels are not shown (please refer to other figures for the labels), and some features of the folding bicycle 3 are omitted. FIG. 10A shows the folding bicycle 3 is in the ride state; therein, one pedal thereof is not shown so that the locking device 48 can be observed. At first, the rear frame 34 or the fifth pivot axis B5 is lifted along a direction Y. Next, the seat support 38 is depressed to drive the four-bar linkage mechanism and also to drive the latch 482 to be disengaged from the locating hole 32b, as shown in FIG. 10B. After the seat support 38 is moved to a predetermined position, the front frame 32 is folded toward the rear-wheel support assembly 36 (i.e. toward the rear frame 34), as shown in FIG. 10C. The handlebar 42 can be folded before or after the folding of the front frame 32, even at the same time. The folding bicycle 3 after folded is shown in FIG. 10D (also referring to FIG. 8A and FIG. 8B). For the expanding action for the folded folding bicycle 3, it is performed by the reverse order of the above folding action; hence, further description is not necessary. It is added that the above folding and expanding actions are just examples and the invention is not limited to this. A user can fold or expand the folding bicycle 3 by his habits.

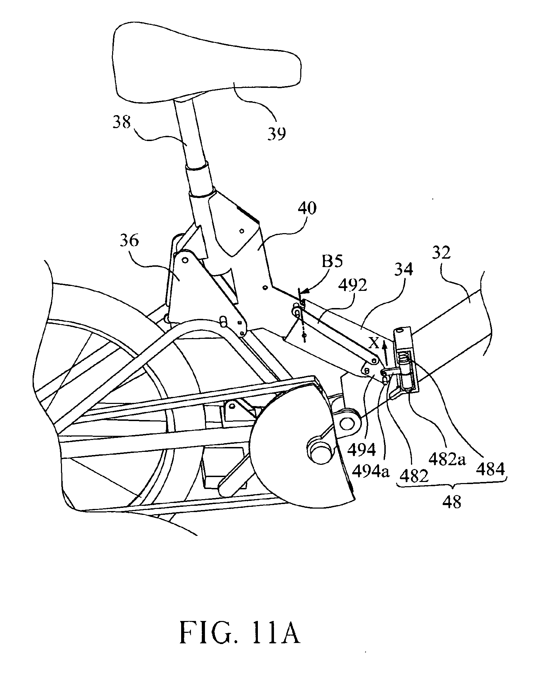

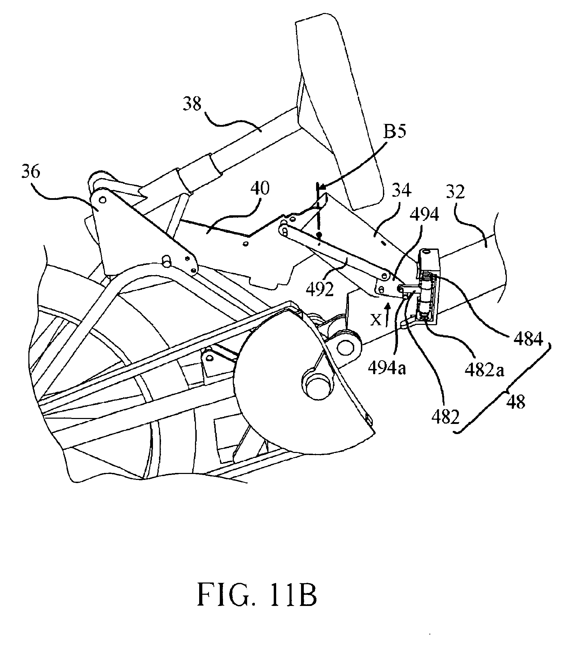

It can be known based on the above explanation for the mechanism of the locking device 48 that the connection cable 49 can be drawn by other links alternatively with consideration to the rotational relation of the link drawing the connection cable 49 to the guiding rod 342. Please refer to FIG. 11A and FIG. 11B. FIG. 11A is a schematic diagram of another way to use the locking device 48. FIG. 11B is a schematic diagram demonstrating the locking device 48 in FIG. 11A is unlocked due to the action of the four-bar linkage mechanism. The difference of the locking device 48 in FIG. 11A to the locking device 48 in FIG. 9A is that a pull link 492 and a rotation link 494, which are not much flexible, are taken as the transmission part for actuating the locking device 48 in FIG. 11A. The pull link 492 connects the rotation link 494 and the link 40. The rotation link 494 is pivotally connected to the rear frame 34 for being capable of rotating to drive the latch 482. Thereby, when the four-bar linkage mechanism is in operation, the link 40 drives the pull link 492 to rotate the rotation link 494 so that a protrusion 494a of the rotation link 494 pushes the latch 482 to be disengaged from the front frame 32. That is, as shown in FIG. 11A, when the link 40 is rotated anticlockwise relatively to the rear frame 34, the rotation link 494 is driven by the pull link 492 also to rotate anticlockwise so that the protrusion 494a of the rotation link 494 touches and pushes the latch 482 to slide along the direction X to make the protrusive portion 482a of the latch 482 be disengaged from the front frame 32, as shown in FIG. 11B.

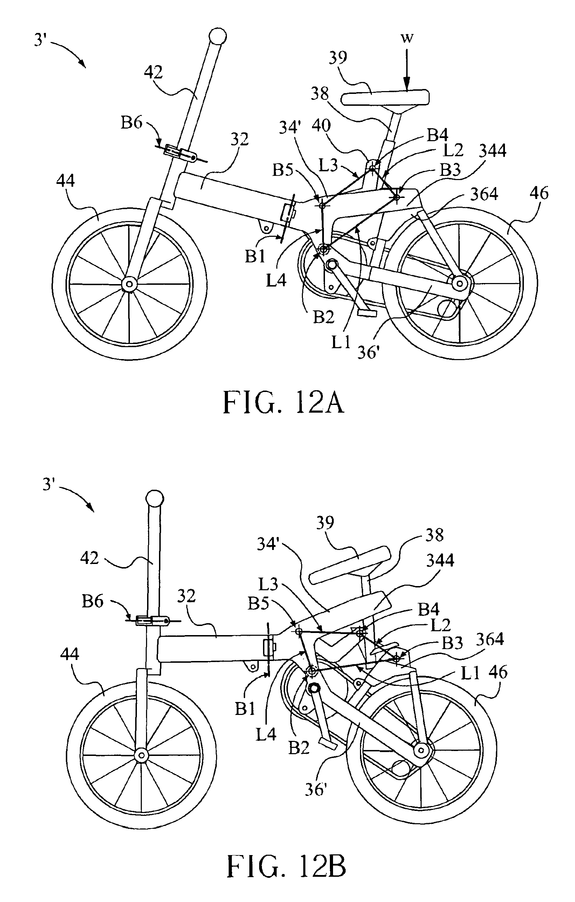

Please refer to FIG. 12A and FIG. 12B. FIG. 12A is a schematic diagram of a folding bicycle 3' of a second preferred embodiment according to the invention. FIG. 12B is a schematic diagram of the folding bicycle 3' in FIG. 12A partially folded. Therein, thick lines represent the mechanism diagram of the four-bar linkage mechanism; the third pivot axis B3 in FIG. 12A is not located at the rear frame 34' actually and just represents the perspective position thereof in FIG. 12A; the actual position of the pivot axis B3 is at the rear-wheel support assembly 36', as shown in FIG. 12B. The folding bicycle 3' in FIG. 12A is similar in structure to the folding bicycle 3 of the first embodiment, so the following description focuses only on the difference of the linkage mechanism.

When the folding bicycle 3' is in a ride state, the rear frame 34' is not only pivotally connected to the rear-wheel support assembly 36' about the second pivot axis B2 but also abutting against the stop portion 364 through the supporting portion 344 so as to constrain the action of the four-bar linkage mechanism. Further, when a weight force w (e.g. the weight of a user) is applied through the saddle 39 on the seat support 38, the extension line of the weight force w passes through the right side of the third pivot axis B3, so the weight force w induces a clockwise rotational moment around the third pivot axis B3 on the seat support 38 (i.e. the second link L2). According to the action features of the four-bar linkage mechanism, the weight force w also induces a rotational moment toward the rear-wheel support assembly 36' indirectly on the rear frame 34' (i.e. the fourth link L4) and then the supporting portion 344 abuts against the stop portion 364 of the rear-wheel support assembly 36' so that the rear frame 34' can be in stable equilibrium.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A folding bicycle frame comprising:
a front frame (32);
a rear frame (34, 34'), thereon defining a plane (P) and a first pivot axis (B1) parallel to the plane (P), the rear frame (34, 34') being pivotally connected to the front frame (32) about the first pivot axis (B1);
a rear-wheel support assembly (36, 36'), thereon defining a second pivot axis (B2) perpendicular to the plane (P), the rear-wheel support assembly (36, 36') being pivotally connected to the rear frame (34, 34') about the second pivot axis (B2);
**characterized in that** the folding bicycle frame further comprises:
a seat support (38), thereon defining a third pivot axis (B3) parallel to the second pivot axis (B2), the seat support (38) being pivotally connected to the rear-wheel support assembly (36, 36') about the third pivot axis (B3) ; and
a link (40) , thereon defining a fourth pivot axis (B4) and a fifth pivot axis (B5) respectively parallel to the second pivot axis (B2), the link (40) being pivotally connected to the seat support (38) about the fourth pivot axis (B4) and to the rear frame (34, 34') about the fifth pivot axis (B5) , the rear frame (34, 34'), the rear-wheel support assembly (36, 36'), the seat support (38), and the link (40) forming a four-bar linkage mechanism;
wherein, the front frame (32) is capable of folding toward the rear frame (34, 34') around the first pivot axis (B1), the rear-wheel support assembly (36, 36') is capable of rotating relatively to the rear frame (34, 34') around the second pivot axis (B2) so as to adjust a relative position between the rear-wheel support assembly (36, 36') and the front frame (32), and the seat support (38) is capable of rotating along a direction toward the first pivot axis (B1) around the third pivot axis (B3).

2. The folding bicycle frame of claim 1 **characterized in that** the link (40) comprises a first stop portion (402), the seat support (38) correspondingly comprises a second stop portion (382), and the folding bicycle frame is in a ride state when the first stop portion (402) and the second stop portion (382) abut against each other.

3. The folding bicycle frame of claim 2 **characterized in that** when the folding bicycle frame is in the ride state and a weight force is loaded on the seat support (38), the weight force induces a clockwise moment (M1) around the third pivot axis (B3) on the seat support (38) and indirectly induces a anticlockwise moment (M2) on the link (40), so that the first stop portion (402) and the second stop portion (382) abut against each other.

4. The folding bicycle frame of claim 3 **characterized in that** the folding bicycle frame further comprises a locking device (48) and a driving member (49), the locking device (48) comprises a latch (482) moveable to be engaged with the rear frame (34, 34') and the front frame (32), the driving member (49) is connected to the latch (482), and the latch (482) is capable of being disengaged from the front frame (32) through the driving member (49) when the four-bar linkage mechanism is in operation.

5. The folding bicycle frame of claim 4 **characterized in that** the locking device (48) further comprises a spring (484), the driving member (49) comprises a connection cable (49), the spring (484) abuts against the rear frame (34, 34') and the latch (482) respectively so that the latch (482) is capable of locking and fixing the front frame (32), the connection cable (49) is connected to the latch (482) and the link (40) respectively, and the link (40) drives the connection cable (49) so as to disengage the latch ( 482) from the front frame (32) when the four-bar linkage mechanism is in operation.

## Patentansprüche

1. Rahmen für ein Klapprad, umfassend:
einen Vorderrahmen (32);
einen Hinterrahmen (34, 34'), auf dem eine Ebene (P) und eine erste Drehachse (B1) parallel zu der Ebene (P) festgelegt sind, worin der Hinterrahmen (34, 34') um die erste Drehachse (B1) mit dem Vorderrahmen (32) schwenkbar verbunden ist;
eine Hinterradhaltevorrichtung (36, 36'), auf der eine zweite Drehachse (B2) senkrecht zu der Ebene (P) festgelegt ist, worin die Hinterradhaltevorrichtung (36, 36') um die zweite Drehachse (B2) mit dem Hinterrahmen (34, 34') schwenkbar verbunden ist; **dadurch gekennzeichnet, dass** Rahmen für ein Klapprad ferner umfasst:
eine Sitzhalterung (38), auf der eine dritte Drehachse (B3) parallel zu der zweiten Drehachse (B2) festgelegt ist, worin die Sitzhalterung (38) mit der Hinterradhaltevorrichtung (36, 36') um die dritte Drehachse (B3) schwenkbar verbunden ist; und
eine Verbindung (40), auf der eine vierte Drehachse (B4) und eine fünfte Drehachse (B5) jeweils parallel zu der zweiten Drehachse (B2) festgelegt sind, worin die Verbindung (40) um die vierte Drehachse (B4) mit der Sitzhalterung (38) und um die fünfte Drehachse (B5) mit dem Hinterrahmen (34, 34') schwenkbar verbunden ist, worin der Hinterrahmen (34, 34'), die Hinterradhaltevorrichtung (36, 36'), die Sitzhalterung (38), und die Verbindung (40) eine vier-Stangen Verbindungseinrichtung bilden;
worin der Vorderrahmen (32) um die erste Drehachse (B1) zu der Hinterradhaltevorrichtung (36, 36') geklappt werden kann, die Hinterradhaltevorrichtung (36, 36') relativ zu dem Hinterrahmen (34, 34') um die zweite Drehachse (B2) gedreht werden kann, um so die relative Lage der Hinterradhaltevorrichtung (36, 36') zu dem Vorderrahmen (32) einzustellen, und die Sitzhalterung (38) um die dritte Drehachse (B3) entlang einer Richtung zu der ersten Drehachse (B 1) gedreht werden kann.

2. Rahmen für ein Klapprad nach Anspruch 1, **dadurch gekennzeichnet, dass** die Verbindung (40) einen ersten Arretierungsabschnitt (402) umfasst, die Sitzhalterung (38) einen zweiten Arretierungsabschnitt (382) entsprechend umfasst, und der Rahmen für ein Klapprad fahrbereit ist, wenn der erste Arretierungsabschnitt (402) und der zweite Arretierungsabschnitt (382) aneinander stoßen.

3. Rahmen für ein Klapprad nach Anspruch 2, **dadurch gekennzeichnet, dass**, wenn der Rahmen für ein Klapprad fahrbereit ist und die Sitzhalterung (38) mit einer Gewichtskraft belastet ist, die Gewichtskraft um die dritte Drehachse (B3) ein rechtsläufiges Moment (M1) auf die Sitzhalterung (38) hervorruft und ein linksläufiges Moment (M2) auf die Verbindung (40) indirekt hervorruft, so dass der erste Arretierungsabschnitt (402) und der zweite Arretierungsabschnitt (382) aneinander stoßen.

4. Rahmen für ein Klapprad nach Anspruch 3, **dadurch gekennzeichnet, dass** der Rahmen für ein Klapprad ferner eine Verriegelungseinrichtung (48) und ein Antriebselement (49) umfasst, worin die Verriegelungseinrichtung (48) einen Riegel (482) umfasst, der zum Eingriff mit dem Hinterrahmen (34, 34') und dem Vorderrahmen (32) bewegt werden kann, worin das Antriebselement (49) mit dem Riegel (482) verbunden ist, und der Riegel (482) durch das Antriebselement (49) von dem Vorderrahmen (32) gelöst werden kann, wenn sich die vier-Stangen Verbindungseinrichtung in Betrieb befindet.

5. Rahmen für ein Klapprad nach Anspruch 4, **dadurch gekennzeichnet, dass** die Verriegelungseinrichtung (48) ferner eine Feder (484) umfasst, das Antriebselement (49) ein Verbindungskabel (49) umfasst, worin die Feder (484) jeweils an den Hinterrahmen (34, 34') und den Riegel (482) stößt, so dass der Riegel (482) den Vorderrahmen (32) verriegeln und befestigen kann, worin das Verbindungskabel (49) jeweils mit dem Riegel (482) und der Verbindung (40) verbunden ist, und die Verbindung (40) das Verbindungskabel (49) antreibt, um so den Riegel (482) von dem Vorderrahmen (32) zu lösen, wenn sich die vier-Stangen Verbindungseinrichtung in Betrieb befindet.

## Revendications

1. Un cadre de bicyclette pliant comprenant:
un cadre avant (32),
un châssis arrière (34, 34 ') définissant un plan (P) et un premier axe de pivotement (B1) parallèle au plan (P), le cadre arrière (34, 34 ') étant relié de façon pivotante au cadre avant (32) autour du premier axe de pivotement (B1);
un ensemble de support de roue arrière (36, 36') définissant un deuxième axe de pivotement (B2) perpendiculaire au plan (P), l'ensemble de support de roue arrière (36, 36 ') étant relié de façon pivotante au châssis arrière (34, 34') autour du second axe de pivotement (B2), **caractérisé en ce que** le cadre de bicyclette pliant comprend en outre :
un support de siège (38) définissant un troisième axe de pivotement (B3) parallèle au deuxième axe de pivotement (B2), le support de siège (38) étant relié de façon pivotante à l'ensemble de support de roue arrière (36, 36') autour du troisième axe de pivotement (B3), et
un lien (40) définissant sur celui-ci un quatrième axe de pivotement (B4) et un cinquième axe de pivotement (B5), respectivement parallèles au second axe de pivotement (B2), le lien (40) étant relié de façon pivotante au support de siège (38) autour du quatrième axe de pivotement (B4) et au châssis arrière (34, 34 ') autour du cinquième axe d'articulation (B5), le cadre arrière (34, 34'), l'ensemble de support de roue arrière (36, 36'), le support de siège (38), et la liaison (40) formant un mécanisme de liaison à quatre barres,
dans lequel, le châssis avant (32) est capable de se replier vers le cadre arrière (34, 34') autour du premier axe de pivotement (B1), l'ensemble de support de roue arrière (36, 36') est capable de tourner par rapport au châssis arrière (34, 34 ') autour du second axe de pivotement (B2) de manière à ajuster une position relative entre l'ensemble de support de roue arrière (36, 36 ') et le châssis avant (32), et le support de siège (38) est capable de tourner le long d'une direction allant vers le premier axe de pivotement (B1) autour du troisième axe de pivotement (B3).

2. Le cadre de bicyclette pliant selon la revendication 1, **caractérisé en ce que** la liaison (40) comprend une première partie de butée (402), le support de siège (38) comprend de manière correspondante une seconde partie de butée (382), et le cadre de bicyclette pliant est dans un état de roulement lorsque la première partie de butée (402) et la seconde partie de butée (382) viennent en butée l'une contre l'autre.

3. Le cadre de bicyclette pliant selon la revendication 2, **caractérisé en ce que** lorsque le cadre de bicyclette pliant est dans l'état de conduite et qu'un poids est chargé sur le support de siège (38), la force de poids induit un moment dans le sens horaire (M1) autour du troisième axe de pivotement ( B3) sur le support de siège (38) et induit indirectement un moment dans le sens contraire des aiguilles d'une montre (M2) sur le lien (40), de sorte que la première partie de butée (402) et la seconde partie de butée (382) viennent en butée l'une contre l'autre.

4. Le cadre de bicyclette pliant selon la revendication 3, **caractérisé en ce que** le cadre de bicyclette pliant comprend en outre un dispositif de verrouillage (48) et un élément d'entraînement (49), le dispositif de verrouillage (48) comprend un loquet (482) mobile pour être engagé avec le cadre arrière (34, 34 ') et le châssis avant (32), l'élément d'entraînement (49) est relié à la bascule (482) et le verrou (482) est susceptible d'être dégagé du châssis avant (32) au travers du membre de conduite (49) lorsque le mécanisme de liaison à quatre barres est en fonctionnement.

5. Le cadre de bicyclette pliant selon la revendication 4, **caractérisé en ce que** le dispositif de verrouillage (48) comprend en outre un ressort (484), l'élément d'entraînement (49) comprend un câble de connexion (49), le ressort (484) vient en butée contre le cadre arrière (34 , 34 ') et le verrou (482) respectivement, de sorte que le verrou (482) est capable de verrouiller et de fixer le châssis avant (32), le câble de raccordement (49) est relié à la bascule (482) et la liaison (40 ) respectivement, et la liaison (40) entraîne le câble de connexion (49) de manière à dégager le verrou (482) à partir du châssis avant (32) lorsque le mécanisme de liaison à quatre barres est en fonctionnement.
